(19) Europäisches Patentamt / European Patent Office / Office européen des brevets

(11) **EP 3 429 292 B1**

(12) **EUROPEAN PATENT SPECIFICATION**

(45) Date of publication and mention
of the grant of the patent:
**19.08.2020   Bulletin 2020/34**

(21) Application number: **17773208.8**

(22) Date of filing: **28.03.2017**

(51) Int Cl.:
**H04W 72/04** *(2009.01)*    **H04L 5/00** *(2006.01)*

(86) International application number:
**PCT/CN2017/078422**

(87) International publication number:
**WO 2017/167178 (05.10.2017 Gazette 2017/40)**

(54) **DOWNLINK TRANSMISSION METHOD AND APPARATUS**

VERFAHREN UND VORRICHTUNG ZUR DOWNLINK-ÜBERTRAGUNG

PROCÉDÉ ET APPAREIL DE TRANSMISSION EN LIAISON DESCENDANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2016   CN 201610204434**

(43) Date of publication of application:
**16.01.2019   Bulletin 2019/03**

(73) Proprietor: **Huawei Technologies Co., Ltd.**
**Longgang District**
**Shenzhen, Guangdong 518129 (CN)**

(72) Inventors:
• **LI, Yuanjie**
  **Shenzhen**
  **Guangdong 518129 (CN)**
• **ZENG, Qinghai**
  **Shenzhen**
  **Guangdong 518129 (CN)**
• **MA, Ni**
  **Shenzhen**
  **Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(56) References cited:
  **WO-A1-2013/070918    CN-A- 101 527 969**
  **CN-A- 104 094 536    US-A1- 2012 039 256**

• **ERICSSON: "EPDCCH initialization for MTC", 3GPP DRAFT; R1-152501 M-PDCCH INITIALIZATION FOR MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050973717, Retrieved from the Internet: URL:http://www.3gpp.org/ftp/Meetings_3GPP_ SYNC/RAN1/Docs/ [retrieved on 2015-05-24]**

EP 3 429 292 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to the communications field, and in particular, to a downlink transmission method, an apparatus, and a system.

**BACKGROUND**

In a wireless communications system, a transmission distance of a radio signal is related to a carrier frequency. A higher carrier frequency results in more rapid attenuation of the radio signal during transmission in space and a shorter transmission distance. In an existing Long Term Evolution (Long Term Evolution, LTE for short) system, different types of information are all transmitted on corresponding time-frequency resource locations by using omnidirectional beams. Because a main operating band is a low frequency band, the different types of information have no problem with coverage. However, as the carrier frequency increases, during high-frequency transmission, the radio signal suffers more rapid attenuation. In this case, a directional beam is introduced to improve coverage of some types of information. However, this causes a large difference between coverage areas of the different types of information.

WO2013/070918A1 discloses a method and an apparatus to enable an extensible and scalable control channel for wireless networks. Hereby, an enhanced Physical Downlink Control Channel (ePDCCH) is disclosed that is implemented with a flexible number of Physical Resource Blocks (PRBs). ERICSSON: "EPDCCH initialization for MTC", 3 GPP DRAFT; R1-152501 M-PDCCH INITIALIZATION FOR MTC, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDES; FRANCE, vol. RAN WG1, no. Fukuoka, Japan; 20150525 - 20150529 24 May 2015 (2015-05-24) discloses EP DCCH initialization for MTC.

**SUMMARY**

Embodiments of the present invention describe a downlink transmission method, an apparatus, and a computer readable storage medium to improve coverage of a common channel and a common signal. The invention is hereby defined by a downlink transmission method according to claim 1, a corresponding apparatus according to claim 9 and 14, respectively, on a computer-readable storage medium according to claim 15. References to embodiments which do not fall under the scope of the claims are to be understood as examples useful for understanding the invention.

According to one aspect, an embodiment of the present invention provides a downlink transmission method. The method includes: determining a radio frame, where the radio frame includes at least two of a first subframe, a second subframe, and a third subframe, the first subframe includes a first symbol, the second subframe includes a second symbol, the third subframe includes the first symbol and the second symbol, a bandwidth of the first symbol is a first bandwidth, a bandwidth of the second symbol is a second bandwidth, and the first bandwidth is less than the second bandwidth; and performing downlink transmission based on the radio frame. It may be learned from the foregoing descriptions that, the radio frame includes both the first symbol having a relatively low bandwidth and the second symbol having a relatively high bandwidth. Therefore, in the solution of this embodiment of the present invention, the first symbol and the second symbol can be used to transmit different types of information, to reduce a difference between coverage areas of the different types of information.

Further, in the solution of this embodiment of the present invention, the first symbol having a relatively low bandwidth can be used to transmit a signal whose coverage area needs to be enhanced. For example, the first symbol may be used to transmit common information (for example, a common channel and a common signal), to increase transmit power of the common information by reducing bandwidth overheads, thereby enhancing a coverage area of the common information.

In a possible design, the radio frame may be determined through preconfiguration, to save communication resources; or the radio frame may be determined through information exchange, to more flexibly determine the radio frame.

In a possible design, the radio frame includes at least one of the first subframe and the third subframe, at least one of a synchronization signal, information carried on a physical broadcast channel PBCH, information carried on a physical downlink control channel PDCCH, a cell-specific reference signal CRS, and system information is transmitted by using at least one of the first symbol of the first subframe and the first symbol of the third subframe. For example, the CRS is transmitted by using at least one of the first symbol of the first subframe and the first symbol of the third subframe. In this case, a reference signal sequence of the CRS may be further determined based on the first bandwidth.

In a possible design, the radio frame includes at least one of the second subframe and the third subframe, and a data signal may be transmitted by using at least one of the second symbol of the second subframe and the second symbol of the third subframe.

In a possible design, information about a time domain location of at least one of the first symbol, the first subframe, and the third subframe in the radio frame may be transmitted in a downlink direction. For example, the information about the time domain location of at least one of the first symbol, the first subframe, and the third subframe in the radio frame may be transmitted by using a system message. For another example, the information about the time domain location of at least one of the first symbol, the first subframe, and the third subframe in the radio frame may be transmitted by using radio resource control RRC signaling. For another example, the information about the time domain location of at least one of the first symbol, the first subframe, and the third subframe that are in a current carrier and in the radio frame may be transmitted by using another carrier.

In a possible design, information about a time domain location of at least one of the second symbol and the second subframe in the radio frame may also be transmitted in the downlink direction, so that a network element receiving the information about the time domain location learns of the information about the time domain location of at least one of the first symbol, the first subframe, and the third subframe in the radio frame.

Therefore, in the solution of this embodiment of the present invention, information about a time domain location of at least one of the first symbol, the second symbol, the first subframe, the second subframe, and the third subframe in the radio frame may be transmitted at a subframe granularity and/or a symbol granularity.

In a possible design, the radio frame may further have one of or any combination the following features: A center frequency of the first symbol is the same as a center frequency of the second symbol; at least one of the first subframe and the third subframe is a Multimedia Broadcast multicast service Single Frequency Network MBSFN subframe; and the first bandwidth is 1.4 MHz, and the second bandwidth is 3 MHz, 5 MHz, 10 MHz, 15 MHz, or 20 MHz. Certainly, the first bandwidth and the second bandwidth may alternatively be any other bandwidth provided that the first bandwidth is less than the second bandwidth.

In a possible design, the method provided in the foregoing aspect may be performed by a base station, or may be performed by a terminal. In different application scenarios, the solution provided in the foregoing aspect may be implemented between a base station and a terminal; or may be implemented between different terminals; or may be implemented between different types of base stations, for example, implemented between a macro base station and a micro base station.

According to another aspect, an embodiment of the present invention provides a wireless communications apparatus, for example, a base station. The base station has a function of implementing behavior of the base station in the foregoing method design. The function may be implemented by using hardware, or may be implemented by hardware executing corresponding software. The hardware or software includes one or more modules corresponding to the foregoing function. The modules may be software and/or hardware.

In a possible design, a structure of the base station includes a processor and a transmitter. The processor is configured to support the base station in performing the corresponding function in the foregoing method. The transmitter is configured to: support communication between the base station and a terminal, and send, to the terminal, information or an instruction mentioned in the foregoing method. The base station may further include a memory. The memory is configured to be coupled to the processor, and stores a necessary program instruction and data of the base station.

According to still another aspect, an embodiment of the present invention provides a wireless communications apparatus, for example, a terminal. The terminal has a function of implementing behavior of the terminal in the foregoing method design. The function may be implemented by using hardware, or may be implemented by hardware executing corresponding software. The hardware or software includes one or more modules corresponding to the foregoing function. The modules may be software and/or hardware.

In a possible design, a structure of the terminal includes a receiver and a processor. The processor is configured to support a base station in performing the corresponding function in the foregoing method. The receiver is configured to support the terminal in receiving various information or instructions sent by the foregoing base station by using the foregoing radio frame. The terminal may further include a memory. The memory is configured to be coupled to the processor, and stores a necessary program instruction and data of the terminal.

According to still another aspect, an embodiment of the present invention provides a communications system. The system includes the wireless communications apparatuses according to the foregoing aspects. For example, the system may include the base station and the terminal according to the foregoing aspects.

According to yet another aspect, an embodiment of the present invention provides a computer storage medium, configured to store a computer software instruction used by the foregoing base station. The computer software instruction includes a program designed for executing the foregoing aspect.

According to yet another aspect, an embodiment of the present invention provides a computer storage medium, configured to store a computer software instruction used by the foregoing terminal. The computer software instruction includes a program designed for executing the foregoing aspect.

Compared with the prior art, in the solutions provided in the embodiments of the present invention, the radio frame is determined, where the radio frame includes at least two of the first subframe, the second subframe, and the third subframe, the first subframe includes the first symbol, the second subframe includes the second symbol, the third subframe includes the first symbol and the second symbol, the bandwidth of the first symbol is the first bandwidth, the bandwidth of the second symbol is the second bandwidth, and the first bandwidth is less than the second bandwidth; and downlink transmission is performed based on the radio frame. It may be learned from the foregoing descriptions that, in the solutions in the embodiments of the present invention, compared with the second symbol, the first symbol having a relatively low bandwidth may be used to transmit some information, to increase transmit power of the information by reducing bandwidth overheads, thereby enhancing a coverage area of the information. Therefore, according to the solutions in the embodiments of the present invention, different types of information can be transmitted by using the first symbol and the second symbol that have different bandwidths, to reduce a difference between coverage areas of the different types of information.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and a person of ordinary skill in the art can derive other implementations of the present invention from these accompanying drawings without creative efforts.

FIG. 1 is a schematic diagram of a possible application scenario according to an embodiment of the present invention;
FIG. 2A is a schematic diagram of a possible system network according to an embodiment of the present invention;
FIG. 2B is a schematic diagram of another possible system network according to an embodiment of the present invention;
FIG. 3 is a schematic diagram of communication using a downlink transmission method according to an embodiment of the present invention;
FIG. 4 is a schematic flowchart of another downlink transmission method according to an embodiment of the present invention;
FIG. 5A and FIG. 5B are schematic diagrams of a first symbol and a second symbol according to an embodiment of the present invention;
FIG. 6A to FIG. 6D are schematic diagrams of a radio frame having a variable bandwidth according to an embodiment of the present invention;
FIG. 7 is a schematic diagram of a first subframe, a second subframe, and a third subframe according to an embodiment of the present invention;
FIG. 8A and FIG. 8B are schematic diagrams of a method for determining a reference sequence of a CRS according to an embodiment of the present invention;
FIG. 9 is a schematic structural diagram of a wireless communications apparatus according to an embodiment of the present invention; and
FIG. 10 is a schematic structural diagram of a terminal according to an embodiment of the present invention.

**DESCRIPTION OF EMBODIMENTS**

To make the purpose, technical solutions, and advantages of the embodiments of the present invention clearer, the following describes the technical solutions of the embodiments of the present invention with reference to the accompanying drawings in the embodiments of the present invention.

Network architectures and service scenarios described in the following embodiments of the present invention aim to more clearly describe the technical solutions in the embodiments of the present invention, but are not intended to limit the technical solutions provided in the embodiments of the present invention. A person of ordinary skill in the art may know that as the network architectures evolve and a new service scenario emerges, the technical solutions provided in the embodiments of the present invention are also applicable to a similar technical problem.

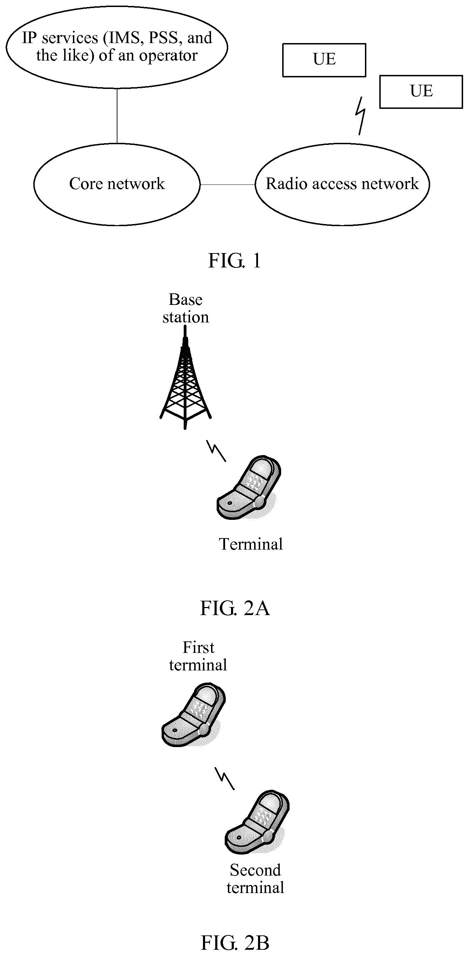

As shown in FIG. 1, a terminal accesses an Internet Protocol (Internet Protocol, IP for short) service network of an operator, for example, a multimedia subsystem (IP Multimedia System, IMS for short) network or a Packet Switched Streaming Service (Packet Switched Streaming Service, PSS) network, by using a radio access network (Radio Access Network, RAN for short) and a core network (Core Network, CN for short). The technical solutions described in the embodiments of the present invention are applicable to an LTE system or another wireless communications system using various radio access technologies, for example, a system using an access technology such as Code Division Multiple Access (Code Division Multiple Access, CDMA for short), Frequency Division Multiple Access (Frequency Division Multiple Access, FDMA for short), Time Division Multiple Access (Time Division Multiple Access, TDMA for short), orthogonal frequency division multiple access (Orthogonal Frequency Division Multiple Access, OFDMA for short), or single carrier frequency division multiple access (Single Carrier Frequency Division Multiple Access, SC-FDMA for short). In addition, the technical solutions are also applicable to a subsequent evolved system of the LTE system, for example, a 5th generation (5th Generation, 5G for short) system. For clarity, only the LTE system is used as an example herein for description. In the LTE system, an evolved universal terrestrial radio access network (Evolved Universal Terrestrial Radio Access Network, E-UTRAN for short) is used as the radio access network, and an evolved packet core (Evolved Packet Core, EPC for short) is used as the core network. The terminal accesses the IMS network by using the E-UTRAN and the EPC.

In the embodiments of the present invention, terms "network" and "system" are often alternately used, but a person skilled in the art can understand meanings of the terms. The terminal in the embodiments of the present invention may include a handheld device, an in-vehicle device, a wearable device, or a computing device having a wireless communication function, or another processing device connected to a wireless modem, and various forms of user equipment (User Equipment, UE for short), mobile stations (Mobile Station, MS for short), and the like. For convenience of description, in the embodiments of the present invention, the devices mentioned above are collectively referred to as a terminal. A base station in the embodiments of the present invention is an apparatus that is deployed in a radio access network and that is configured to provide a wireless communication function for the terminal. The base station may include various forms of macro base stations, micro base stations, relay nodes, access points, and the like. The base station may alternatively be a base station controller (Base Station Controller, BSC for short) in a Global System for Mobile Communications (Global System for Mobile Communications, GSM for short) or a CDMA system, or may be a radio network controller (Radio Network Controller, RNC for short) in a Wideband Code Division Multiple Access (Wideband Code Division Multiple Access, WCDMA for short) system, or may be a base station (Base Station, BS for short), a centralized server, or the like in various communications systems, or may be a combination of a base station and a controller. In systems using different radio access technologies, devices having a base station function may have different names. For example, in an LTE system, the device is referred to as an evolved NodeB (evolved NodeB, eNodeB or eNB for short). In a 3rd generation (3rd Generation, 3G for short) system, the device is referred to as a NodeB (NodeB). For convenience of description, in the embodiments of the present invention, the foregoing apparatus providing the wireless communication function for the terminal is referred to as a base station or BS. It should be understood that the base station in the embodiments of the present invention includes both a base station in an existing communications system and a base station in a communications system (for example, a 5G communications system) that may emerge in future. This is not limited in the embodiments of the present invention.

FIG. 2A is a schematic diagram of a possible system according to an embodiment of the present invention. The system mainly includes a base station and a terminal. The base station may communicate with the terminal by using a cellular network. For example, the system shown in FIG. 2A may be a Time Division Duplex (Time Division Duplex, TDD for short) system, or may be a Frequency Division Duplex (Frequency Division Duplex, FDD for short) system. For another example, the system shown in FIG. 2A may be a single carrier system, or may be a multicarrier system. For another example, the system shown in FIG. 2A may be a high frequency communications system (for example, a system having a frequency band higher than 6 GHz, refer to a requirement of a standard or system for a specific definition of a high frequency), or may be a low frequency communications system (for example, a system having a frequency band lower than 6 GHz, refer to a requirement of a standard or system for a specific definition of a low frequency).

FIG. 2B is a schematic diagram of another possible system according to an embodiment of the present invention. In the system shown in FIG. 2B, for content the same as or similar to the system shown in FIG. 2A, refer to detailed descriptions related to FIG. 2A, and details are not described herein again. An application scenario of the system shown in FIG. 2B may be a device-to-device (Device-to-Device, D2D) communication scenario, or may be a machine-to-machine (Machine-to-Machine, M2M) communication scenario. D2D communication means that, under control of a system, terminals are allowed to communicate with each other by reusing a cell resource. M2M communication means information exchange between a machine and another machine. For example, the M2M communication may be information exchange between a first terminal and a second terminal in FIG. 2B.

It should be noted that, when a system architecture shown in FIG. 2A is used, downlink transmission in the solutions provided in the embodiments of the present invention means transmission from a base station to a terminal; and when a system architecture shown in FIG. 2B is used, downlink transmission in the solutions provided in the embodiments of the present invention means transmission from a terminal to another terminal. For example, in FIG. 2B, the downlink transmission may be transmission from the first terminal to the second terminal, or may be transmission from the second terminal to the first terminal.

It may be understood that the solutions in the embodiments of the present invention may be applied to another system architecture in addition to the system architecture shown in FIG. 2A or FIG. 2B. For example, the solutions may be applied to a system architecture including a macro base station and a micro base station. In this application scenario, the downlink transmission in the solutions provided in the embodiments of the present invention may be transmission from the macro base station to the micro base station, or may be transmission from the micro base station to the macro base station.

The embodiments of the present invention are further described in detail based on the foregoing common aspect of the embodiments of the present invention.

An embodiment of the present invention provides a downlink transmission method, and a base station, a terminal, and a system based on the method. The method may include: determining a radio frame, where the radio frame includes at least two of a first subframe, a second subframe, and a third subframe, the first subframe includes a first symbol, the second subframe includes a second symbol, the third subframe includes the first symbol and the second symbol, a bandwidth of the first symbol is a first bandwidth, a bandwidth of the second symbol is a second bandwidth, and the first bandwidth is less than the second bandwidth; and performing downlink transmission based on the radio frame. It may be learned from the foregoing descriptions that, in the solution in this embodiment of the present invention, compared with the second symbol, the first symbol having a relatively low bandwidth may be used to transmit some information, to increase transmit power of the information by reducing bandwidth overheads, thereby enhancing a coverage area of the information. Therefore, according to the solution in this embodiment of the present invention, different types of information can be transmitted by using the first symbol and the second symbol that have different bandwidths, to reduce a difference between coverage areas of the different types of information.

It may be learned from the descriptions of the radio frame that, the radio frame includes both the first symbol and the second symbol, but the bandwidth of the first symbol is different from that of the second symbol. Therefore, compared with a bandwidth of a conventional radio frame, a bandwidth of the radio frame is variable. For convenience of description, in the following descriptions, the radio frame may alternatively be referred to as a radio frame having a variable bandwidth, and the conventional radio frame may alternatively be referred to as a radio frame having a fixed bandwidth. In the prior art, the base station performs downlink transmission with the terminal based on the radio frame having a fixed bandwidth. When coverage of data information and common information is insufficient, the data information may be transmitted by using a directional beam to improve a coverage area, and a coverage problem of the common information becomes obvious. In this case, the solution provided in this embodiment of the present invention may be used. The downlink transmission is performed based on the radio frame having a variable bandwidth, and the first symbol having a relatively low bandwidth is used to transmit the common information, to increase transmit power by reducing bandwidth overheads, thereby enhancing a coverage area. The common information is information sent to one or more non-specific objects. For example, in the system architecture shown in FIG. 2A, the information may be information sent by the base station to one or more non-specific terminals. The common information may include a common channel and/or a common signal. The common channel may include one of or any combination of the following channels: a physical broadcast channel (Physical Broadcast Channel, PBCH), a physical downlink control channel (Physical Downlink Control Channel, PDCCH), a synchronization channel (Synchronization Channel, SCH), a broadcast channel (Broadcast Channel, BCH), a paging channel (Paging Channel, PCH), a forward access channel (Forward Access Channel, FACH), a Common Pilot Channel (Common Pilot Channel, CPICH), and the like. The common signal may include one of or any combination of the following signals: a synchronization signal, a cell-specific reference signal (Cell-specific Reference Signal, CRS), system information, and the like. The synchronization signal may include a primary synchronization signal (Primary Synchronization Signal, PSS) and a secondary synchronization signal (Secondary Synchronization Signal, SSS). It may be understood that the foregoing various types of common channels and/or common signals are channels and/or signals sent to one or more non-specific objects. With evolution of the system architecture and development of standards, names of the channels and/or signals may change, but the changes do not go beyond the scope of the embodiments of the present invention.

It should be noted that, when the solution in this embodiment of the present invention is applied to the system shown in FIG. 2A or a similar system, the base station may perform downlink transmission with all terminals based only on the radio frame having a variable bandwidth; or the base station may perform downlink transmission with some terminals based on the radio frame having a variable bandwidth, and perform downlink transmission with the other terminals based on the radio frame having a fixed bandwidth. Therefore, the solution in this embodiment of the present invention is better compatible with a conventional transmission mode.

The solutions provided in the embodiments of the present invention are described below with reference to more accompanying drawings and by using an example in which the system architecture shown in FIG. 2A is used.

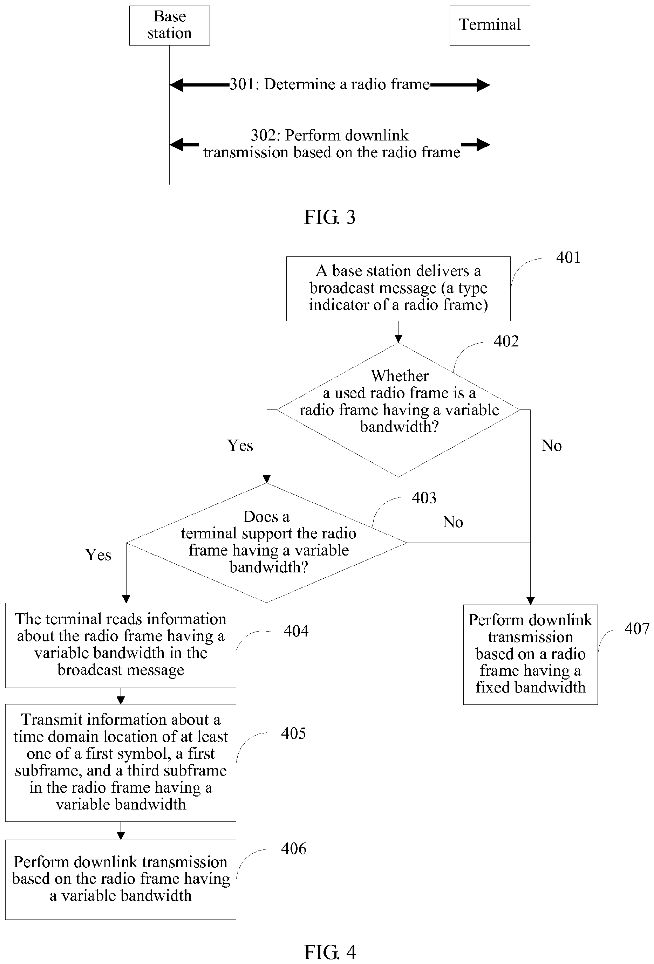

FIG. 3 is a schematic diagram of communication using a downlink transmission method according to an embodiment of the present invention.

In part 301, a base station and a terminal determine a radio frame, and the radio frame is the radio frame having a variable bandwidth. The radio frame having a variable bandwidth includes at least two of a first subframe, a second subframe, and a third subframe, the first subframe includes a first symbol, the second subframe includes a second symbol, the third subframe includes the first symbol and the second symbol, a bandwidth of the first symbol is a first bandwidth, a bandwidth of the second symbol is a second bandwidth, and the first bandwidth is less than the second bandwidth.

In an example, the base station and the terminal may determine the radio frame having a variable bandwidth through preconfiguration. For example, the preconfiguration may be performed by using a broadcast message: After

**EP 3 429 292 B1**

determining the radio frame having a variable bandwidth, the base station delivers the broadcast message, where the broadcast message carries information about the subframes and symbols included in the radio frame. For example, the information may be carried by using system information in the broadcast message. After receiving the broadcast message, the terminal may determine the radio frame having a variable bandwidth based on the information carried in the broadcast message.

In part 302, downlink transmission is performed between the base station and the terminal based on the radio frame having a variable bandwidth.

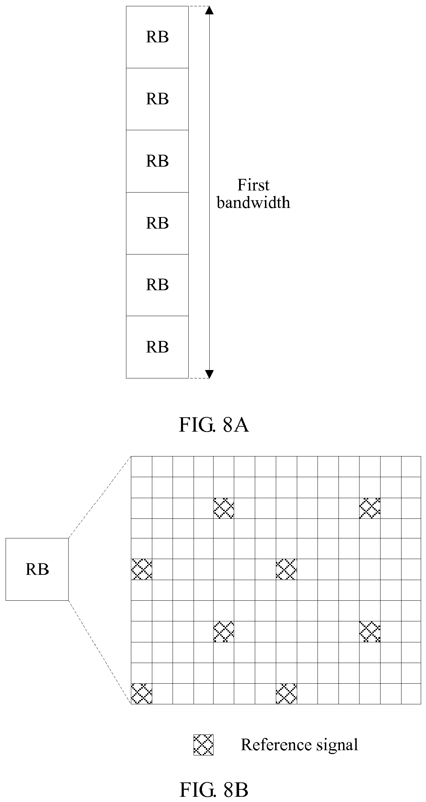

In an example, when the radio frame having a variable bandwidth includes at least one of the first subframe and the third subframe, at least one of a synchronization signal, information carried on a PBCH, information carried on a PDCCH, a CRS, and system information is transmitted by using at least one of the first symbol of the first subframe and the first symbol of the third subframe. Further, when the CRS is transmitted by using at least one of the first symbol of the first subframe and the first symbol of the third subframe, a reference signal sequence (reference signal sequence) of the CRS may be further determined based on the first bandwidth. For example, the reference signal sequence may be determined by using the method shown in FIG. 8A and FIG. 8B. For details, refer to the detailed descriptions below.

In another example, when the radio frame includes at least one of the second subframe and the third subframe, a data signal is transmitted by using at least one of the second symbol of the second subframe and the second symbol of the third subframe.

It may be understood that, the method shown in FIG. 3 may also be applied to the system architecture shown in FIG. 2B or a similar architecture. When the system architecture shown in FIG. 2B is used, the solution in this embodiment of the present invention may be implemented by any two terminals.

FIG. 4 is a schematic flowchart of another downlink transmission method according to an embodiment of the present invention. It should be noted that, in the method shown in FIG. 4, for content the same as or similar to that of the method shown in FIG. 3, refer to the related detailed descriptions of FIG. 3, and details are not described herein again.

In part 401, a base station delivers a broadcast message, and the broadcast message carries a type indicator of a radio frame. The type indicator is used to indicate whether a used radio frame is a radio frame having a variable bandwidth. It may be understood that, before delivering the broadcast message, the base station first determines the radio frame having a variable bandwidth. The radio frame having a variable bandwidth includes at least two of a first subframe, a second subframe, and a third subframe, the first subframe includes a first symbol, the second subframe includes a second symbol, the third subframe includes the first symbol and the second symbol, a bandwidth of the first symbol is a first bandwidth, a bandwidth of the second symbol is a second bandwidth, and the first bandwidth is less than the second bandwidth.

In an example, the type indicator of the radio frame may be represented by using a bit or in another manner. For example, the bit of 0 indicates that the used radio frame is a radio frame having a fixed bandwidth, and the bit of 1 indicates that the used radio frame is a radio frame having a variable bandwidth. Certainly, it may alternatively be that, the bit of 0 indicates a radio frame having a variable bandwidth, and the bit of 1 indicates a radio frame having a fixed bandwidth.

In part 402, after receiving the broadcast message, a terminal determines, based on the type indicator that is of a radio frame and carried in the broadcast message, whether a used radio frame is a radio frame having a variable bandwidth. If the used radio frame is a radio frame having a variable bandwidth, perform part 403; if the used radio frame is not a radio frame having a variable bandwidth, perform part 407.

In part 403, the terminal determines whether the radio frame having a variable bandwidth is supported. If the radio frame having a variable bandwidth is supported, perform part 404; if the radio frame having a variable bandwidth is not supported, perform part 407.

In part 404, the terminal reads information that is in the broadcast message and that is about the radio frame having a variable bandwidth. By reading the information about the radio frame having a variable bandwidth, the terminal determines the radio frame having a variable bandwidth. To be specific, the terminal determines that the radio frame having a variable bandwidth includes at least two of the first subframe, the second subframe, and the third subframe, the first subframe includes the first symbol, the second subframe includes the second symbol, the third subframe includes the first symbol and the second symbol, the bandwidth of the first symbol is the first bandwidth, the bandwidth of the second symbol is the second bandwidth, and the first bandwidth is less than the second bandwidth.

In part 405, information about a time domain location of at least one of the first symbol, the first subframe, and the third subframe in the radio frame having a variable bandwidth is transmitted in a downlink direction. Then, the terminal may learn of the time domain location at a symbol granularity and/or a subframe granularity. For example, at the symbol granularity, the terminal may learn of a time domain location of the first symbol in the radio frame having a variable bandwidth. For another example, at the subframe granularity, when the radio frame having a variable bandwidth includes at least one of the first subframe and the third subframe, the terminal may learn of a time domain location of at least one of the first subframe and the third subframe in the radio frame having a variable bandwidth.

In an example, information about a time domain location of the second symbol in the radio frame having a variable bandwidth may also be transmitted in the downlink direction, so that the terminal learns of the time domain location of the first symbol in the radio frame having a variable bandwidth. For example, the broadcast message delivered by the base station in part 401 carries the information about the time domain location of the second symbol in the radio frame having a variable bandwidth. Alternatively, the terminal may simultaneously learn of time domain locations of the first symbol and the second symbol in the radio frame having a variable bandwidth.

In another example, when the radio frame having a variable bandwidth includes the third subframe, the terminal may further learn of time domain locations of the first symbol and the second symbol in the third subframe. For example, the terminal may learn of the distribution of the first symbol in the third subframe based on the information that is read in part 404 and that is about the radio frame having a variable bandwidth, and then may learn of the distribution of the second symbol in the third subframe; or the terminal may learn of the distribution of the second symbol in the third subframe based on the information read above, and then may learn of the distribution of the first symbol in the third subframe; or the terminal may simultaneously learn of the distribution of the first symbol and the second symbol in the third subframe based on the information read above.

In still another example, the base station may alternatively add system information of the time domain location to the broadcast message, so that the terminal may learn of, based on the system information, the time domain location of at least one of the first symbol, the first subframe, and the third subframe in the radio frame having a variable bandwidth.

In still another example, the base station may alternatively send the information about the time domain location of at least one of the first symbol, the first subframe, and the third subframe in the radio frame having a variable bandwidth to the terminal by using a system message or radio resource control (Radio Resource Control, RRC for short) signaling; alternatively, for a current carrier, the base station may send, to the terminal by using another carrier, the information about the time domain location of at least one of the first symbol, the first subframe, and the third subframe that are in the current carrier and in the radio frame having a variable bandwidth. For example, when sending the information by using the RRC signaling, the base station may notify a plurality of terminals by using RRC common signaling, or the base station may notify a terminal by using RRC dedicated signaling. Correspondingly, the terminal may learn of the information about the time domain location based on the RRC common signaling or the RRC dedicated signaling.

In part 406, the base station and the terminal perform downlink transmission based on the radio frame having a variable bandwidth.

In an example, at least one of a synchronization signal, information carried on a PBCH, information carried on a PDCCH, a CRS, and system information is transmitted by using at least one of the first symbol of the first subframe and the first symbol of the third subframe. To be specific, the signal or information may be transmitted by using the first symbol having a relatively low bandwidth, to increase transmit power of the signal or information by reducing bandwidth overheads, thereby enhancing a coverage area of the signal or information. A data signal may be further transmitted by using at least one of the second symbol of the second subframe and the second symbol of the third subframe. To be specific, the data signal may be transmitted by using the second symbol having a relatively high bandwidth.

In part 407, the base station and the terminal perform downlink transmission based on the radio frame having a fixed bandwidth.

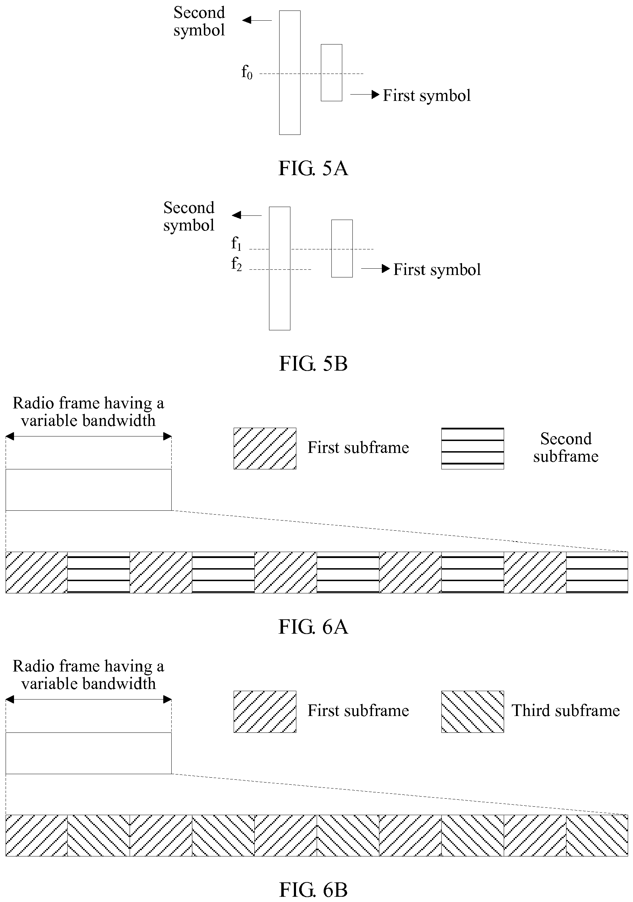

It should be noted that, the radio frame having a variable bandwidth in the method provided in this embodiment of the present invention may have one of or any combination of the following features:
Center frequency: A center frequency of the first symbol may be the same as a center frequency of the second symbol. For example, as shown in FIG. 5A, the center frequencies of the first symbol and the second symbol are both a frequency $f_0$. Alternatively, a center frequency of the first symbol may be different from a center frequency of the second symbol, to be specific, there is a frequency offset between the center frequency of the first symbol and the center frequency of the second frequency. For example, as shown in FIG. 5B, the center frequency of the first symbol is a frequency $f_1$, and the center frequency of the second symbol is $f_2$, where $f_1$ may be greater than or less than $f_2$.

Bandwidth: Both the first bandwidth of the first symbol and the second bandwidth of the second symbol may be any bandwidth provided that the first bandwidth is less than the second bandwidth. For example, in an LTE system, when the first bandwidth is 1.4 MHz, the second bandwidth may be 3 MHz, 5 MHz, 10 MHz, 15 MHz, or 20 MHz; when the first bandwidth is 3 MHz, the second bandwidth may be 5 MHz, 10 MHz, 15 MHz, or 20 MHz. The first bandwidth or the second bandwidth may alternatively be a bandwidth in any other existing communications system, or may be a bandwidth in a communications system that may emerge in future, for example, a possible bandwidth in a 5G system.

Sub frame type: In an example, the first sub frame may be a Multimedia Broadcast multicast service Single Frequency Network (Multimedia Broadcast multicast service Single Frequency Network, MBSFN for short) subframe; or the third subframe may also be an MBSFN subframe. Optionally, an MBSFN region of the MBSFN subframe includes the first symbol. The MBSFN subframe may be used to transmit an MBSFN reference signal. For content related to the MBSFN reference signal, refer to the related descriptions in the protocol 36.211.

Cyclic prefix (Cyclic Prefix, CP for short): An included symbol may have a normal cyclic prefix (normal CP) or an extended cyclic prefix (extended CP).

The radio frame having a variable bandwidth provided in the embodiments of the present invention is further described below with reference to more accompanying drawings.

In the following descriptions, an example in which an application scenario is a TDD system, a cyclic prefix is a normal cyclic prefix, and a center frequency of a first symbol is the same as a center frequency of the second symbol is used for description.

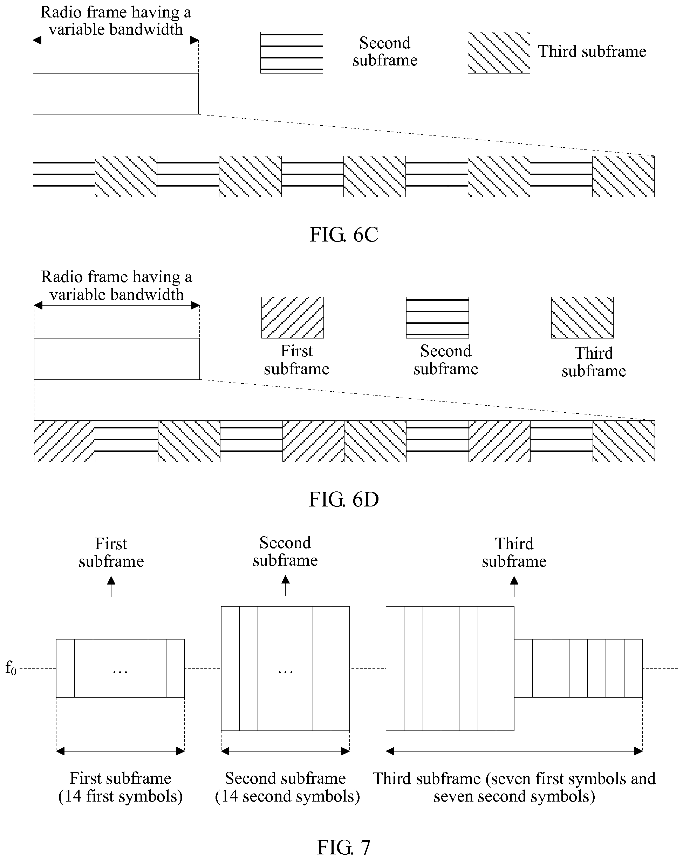

FIG. 6A to FIG. 6D are schematic diagrams of a radio frame having a variable bandwidth according to an embodiment of the present invention. In this embodiment of the present invention, the radio frame having a variable bandwidth may include at least two of a first subframe, a second subframe, and a third subframe. For example, as shown in FIG. 6A, the radio frame having a variable bandwidth may include the first subframe and the second subframe. For another example, as shown in FIG. 6B, the radio frame having a variable bandwidth may include the first subframe and the third subframe. For another example, as shown in FIG. 6C, the radio frame having a variable bandwidth may include the second subframe and the third subframe. For another example, as shown in FIG. 6D, the radio frame having a variable bandwidth may include the first subframe, the second subframe, and the third subframe. It may be understood that, quantities and arrangement manners that are of the three types of subframes included in the radio frame having a variable bandwidth and that are separately shown in FIG. 6A to FIG. 6D are merely examples, and this does not impose a limitation on this embodiment of the present invention.

When downlink transmission is performed based on the radio frame having a variable bandwidth, a base station may control a bandwidth change of the radio frame by using a filter. For example, the base station may use a first bandwidth when transmitting the first symbol and use a second bandwidth when transmitting the second symbol, by using a time-varying filter. For another example, the base station may perform transmission by using different filters, where one filter corresponds to the first bandwidth, and another filter corresponds to the second bandwidth. The former filter is used when the first symbol is transmitted, and the latter filter is used when the second symbol is transmitted.

It should be noted that the three types of subframes shown in FIG. 6A to FIG. 6D are merely examples, but do not limit bandwidths and the like of the subframes. The three types of subframes are described below with reference to FIG. 7.

In FIG. 7, an example in which the first symbol and the second symbol have a same center frequency $f_0$ is used for description. As shown in FIG. 7, the first subframe includes 14 first symbols; the second subframe includes 14 second symbols; the third subframe includes seven first symbols and seven second symbols, where the seven first symbols are arranged before the seven second symbols. Certainly, quantities of symbols included in the three types of subframes may alternatively be other quantities. This is not limited in this embodiment of the present invention. It should be noted that, in the third subframe shown in FIG. 7, the quantities and arrangement sequence of the included first symbols and second symbols are merely examples, and this does not impose a limitation on this embodiment of the present invention. It may be understood that, in addition to the first symbol and/or the second symbol, the three types of subframes may include another type of symbol.

In the solutions provided in the embodiments of the present invention, when the radio frame having a variable bandwidth includes at least one of the first subframe and the third subframe, a common signal and/or information carried on a common channel may be transmitted by using at least one of the first symbol of the first subframe and the first symbol of the third subframe, to increase transmit power of the common signal and/or the information carried on the common channel by reducing bandwidth overheads, thereby enhancing a coverage area. For example, at least one of a synchronization signal, information carried on a PBCH, information carried on a PDCCH, a CRS, and system information may be transmitted by using at least one of the first symbol of the first subframe and the first symbol of the third subframe.

In an example, when the CRS is transmitted by using at least one of the first symbol of the first subframe and the first symbol of the third subframe, a reference signal sequence of the CRS may be determined in the following manner: A basic sequence is generated first.

In an example, the basic sequence may be generated by using a random sequence, for example, by using the following formula:

$$r_{l,n_s}(m) = \frac{1}{\sqrt{2}}\left(1 - 2 \cdot c(2m)\right) + j\frac{1}{\sqrt{2}}\left(1 - 2 \cdot c(2m+1)\right), \quad m = 0,1,...,2N_{\mathrm{RB}}^{\mathrm{max,DL}} - 1$$

,

where

$n_s$ represents a timeslot of a radio subframe; *l* represents a location of a reference signal in time domain (which may be learned of by using, for example, a symbol corresponding to the timeslot); $N_{\mathrm{RB}}^{\mathrm{max,DL}}$ represents a maximum downlink bandwidth; and *c(i)* represents a pseudo-random sequence (for specific information, refer to content in Section 7.2 of the 3GPP Protocol 36.211).

Then a resource element is mapped.

The basic sequence $r_{l,n_s}(m)$ is mapped to a complex-valued modulation symbol $a_{k,l}^{(p)}$, where $a_{k,l}^{(p)}$ is used as a reference symbol of an antenna port $p$ in the timeslot $n_s$, to be specific, $a_{k,l}^{(p)} = r_{l,n_s}(m')$, where

$$k = 6m + (v + v_{\text{shift}}) \bmod 6$$

$$l = \begin{cases} 0, N_{\text{symb}}^{\text{DL}} - 3 & \text{if } p \in \{0,1\} \\ 1 & \text{if } p \in \{2,3\}. \end{cases}$$

$$m = 0,1,...,2 \cdot N_{\text{RB}}^{\text{DL}} - 1$$

$$m' = m + N_{\text{RB}}^{\text{max,DL}} - N_{\text{RB}}^{\text{DL}}$$

Variables $v$ and $v_{\text{shift}}$ define frequency domain locations of different reference signals, where

$$v = \begin{cases} 0 & \text{if } p = 0 \text{ and } l = 0 \\ 3 & \text{if } p = 0 \text{ and } l \neq 0 \\ 3 & \text{if } p = 1 \text{ and } l = 0 \\ 0 & \text{if } p = 1 \text{ and } l \neq 0 \\ 3(n_s \bmod 2) & \text{if } p = 2 \\ 3 + 3(n_s \bmod 2) & \text{if } p = 3 \end{cases}$$

and $v_{\text{shift}} = N_{\text{ID}}^{\text{cell}} \bmod 6$, where

$k$ is a location of the reference signal in frequency domain;
$l$ is a location of the reference signal in time domain;
$p$ is the antenna port;

$N_{\text{symb}}^{\text{DL}}$ is a quantity of symbols included in a downlink timeslot (for example, in an LTE system, which is 7 in terms of a normal CP, or is 6 in terms of an extended CP); and

$N_{\text{RB}}^{\text{DL}}$ may be understood as a quantity of downlink RBs in terms of downlink bandwidth configuration. For example, 20 M corresponds to 100 RBs, and 1.4 M corresponds to six RBs. For example, a quantity of downlink RBs corresponding to the first bandwidth may be used to configure a downlink bandwidth, so that the reference signal sequence of the CRS may be determined based on the first bandwidth.

An example in which $N_{\text{RB}}^{\text{DL}}$ is the first bandwidth and the first bandwidth is 1.4 M is used for description below with reference to FIG. 8A and FIG. 8B. As shown in FIG. 8A, after a basic sequence is mapped to a resource element, the first bandwidth corresponds to six RBs. As shown in FIG. 8B, one RB corresponds to 14 symbols in time domain (horizontal direction), and corresponds to 12 subcarriers in frequency domain (vertical direction). Distribution of reference signals of CRSs on one RB is shown in FIG. 8B. When the first bandwidth corresponds to six RBs, a reference signal sequence of a CRS carried in a symbol in time domain includes reference signals of CRSs distributed on 6×12 subcarriers corresponding to the symbol.

The solutions provided in the embodiments of the present invention are described above mainly from a perspective of interaction between the base station and the terminal. It may be understood that, to implement the foregoing functions, the base station and the terminal include corresponding hardware structures and/or software modules for performing the functions. With reference to units and algorithm steps in the examples described in the embodiments of the present invention, the embodiments of the present invention can be implemented by using hardware or a combination of hardware and computer software. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of the technical solutions in the embodiments of the present invention.

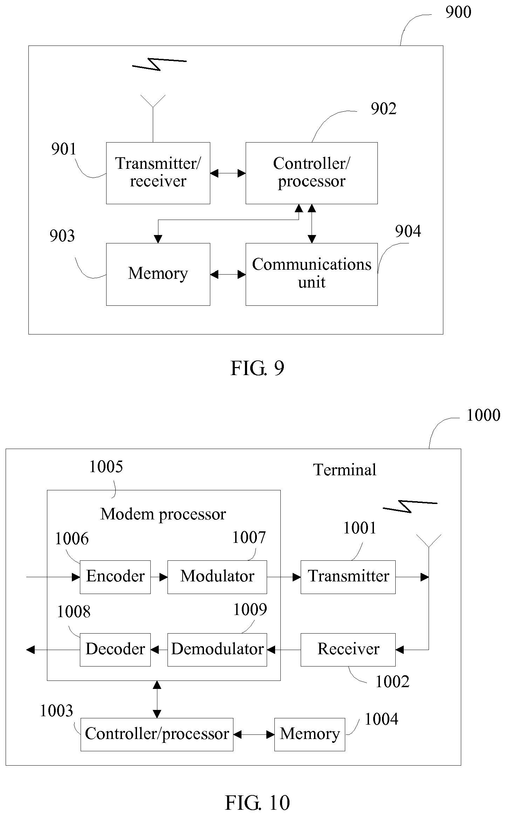

FIG. 9 is a schematic structural diagram of a possible wireless communications apparatus according to an embodiment of the present invention. The wireless communications apparatus 900 shown in FIG. 9 may be the base station, the first terminal, or the second terminal mentioned in the foregoing embodiments.

The apparatus 900 includes a transmitter/receiver 901 and a processor 902. The processor 902 may alternatively be a controller, and is represented by a "controller/processor 902" in FIG. 9. An example in which the apparatus 900 is a base station is used for description below. The transmitter/receiver 901 is configured to: support the base station in receiving and transmitting information with the terminal in the foregoing embodiments, and support the terminal in performing wireless communication with another terminal. The processor 902 performs various functions for performing communication with the terminal. On an uplink, an uplink signal from the terminal is received by using an antenna, is demodulated by the receiver 901 (for example, a high frequency signal is demodulated into a baseband signal), and is further processed by the processor 902, to recover service data and signaling information sent by the terminal. On a downlink, the service data and signaling information are processed by the processor 902, and are modulated by the transmitter 901 (for example, a baseband signal is modulated into a high frequency signal), to generate a downlink signal. The downlink signal is transmitted to the terminal by using the antenna. It should be noted that the demodulation or modulation function may also be implemented by the processor 902. The processor 902 further performs the processing process related to the base station in FIG. 3 to FIG. 8B and/or another process used for the technical solutions described in this application. In an example, the processor 902 is configured to support the base station in performing parts 301 and 302 in FIG. 3 and procedures 401, 405, 406, and 407 in FIG. 4.

Further, the apparatus 900 may further include a memory 903. The memory 903 is configured to store program code and data of the apparatus 900.

When the apparatus 900 is the base station, the base station may further include a communications unit 904. The communications unit 904 is configured to support the base station in performing communication with another network entity (for example, a network device in a core network). For example, in an LTE system, the communications unit 904 may be an S1-U interface, and is configured to support the base station in performing communication with a severing gateway (Serving Gateway, SGW for short); or the communications unit 904 may be an S1-MME interface, and is configured to support the base station in performing communication with a mobility management entity (Mobility Management Entity, MME for short).

It may be understood that FIG. 9 shows only a simplified design of the apparatus 900. During actual application, the apparatus 900 may include any quantity of transmitters, receivers, processors, controllers, memories, communications units, and the like. All base stations that can implement the embodiments of the present invention fall within the protection scope of the embodiments of the present invention.

FIG. 10 is a simplified schematic diagram of a possible design structure of the terminal in the foregoing embodiment. The terminal 1000 includes a transmitter 1001, a receiver 1002, and a processor 1003. The processor 1003 may alternatively be a controller, and is represented by a "controller/processor 1003" in FIG. 10. Optionally, the terminal 1000 may further include a modem processor 1005. The modem processor 1005 may include an encoder 1006, a modulator 1007, a decoder 1008, and a demodulator 1009.

The transmitter 1001 adjusts (such as through analog conversion, filtering, amplification, and up-conversion) output sampling and generates an uplink signal. The uplink signal is transmitted to the base station in the foregoing embodiments by using an antenna. On a downlink, the antenna receives a downlink signal transmitted by the base station in the foregoing embodiments. The receiver 1002 adjusts (such as through filtering, amplification, down-conversion, and digitization) the signal received from the antenna and provides input sampling. In the modem processor 1005, the encoder 1006 receives service data and a signaling information that are to be sent on the uplink, and processes (such as through formatting, coding, and interleaving) the service data and signaling information. The modulator 1007 further processes (such as through symbol mapping and modulation) encoded service data and an encoded signaling information, and provides output sampling. The demodulator 1009 processes (such as through demodulation) the input sampling and provides symbol estimation. The decoder 1008 processes (such as through de-interleaving and decoding) the symbol estimation and provides decoded data and a decoded signaling information that are sent to the terminal 1000. The encoder 1006, the modulator 1007, the demodulator 1009, and the decoder 1008 may be implemented by the combined modem processor 1005. These units perform processing based on a radio access technology (such as an access technology of LTE or another evolved system) used by a radio access network. It should be noted that, when the terminal 1000 does not include the modem processor 1005, the foregoing functions of the modem processor 1005 may alternatively be implemented by the processor 1003.

The processor 1003 controls and manages actions of the terminal 1000, and is configured to perform the processing performed by the terminal 1000 in the foregoing embodiments. For example, the processor 1003 is configured to control the terminal 1000 to perform downlink transmission based on a radio frame having a variable bandwidth or a radio frame having a fixed bandwidth. In an example, the processor 1003 is configured to support the terminal 1000 in performing procedures 301 and 302 in FIG. 3 and procedures 402, 403, 404, 405, 406, and 407 in FIG. 4.

Further, the terminal 1000 may further include a memory 1004. The memory 1004 is configured to store program code and data of the terminal 1000.

A processor configured to perform functions of the foregoing base station or terminal in the embodiments of the present invention may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a transistor logic device, a hardware component, or any combination thereof. The processor may implement or perform various examples of logical blocks, modules, and circuits described with reference to the content disclosed in the embodiments of the present invention. The processor may alternatively be a combination implementing a computing function, for example, a combination including one or more microprocessors, or a combination of a DSP and a microprocessor.

The methods or algorithm steps described with reference to the content disclosed in the embodiments of the present invention may be implemented in a hardware manner, or may be implemented in a manner of executing a software instruction by a processor. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or a storage medium in any other forms well-known in the art. A storage medium used as an example is coupled to the processor, so that the processor can read information from the storage medium, and can write information into the storage medium. Certainly, the storage medium may alternatively be a part of the processor. The processor and the storage medium may be located in an ASIC. In addition, the ASIC may be located in the base station or the terminal. Certainly, the processor and the storage medium may also exist in the base station or the terminal as discrete components.

A person skilled in the art should be aware that in one or more of the foregoing examples, the functions described in the embodiments of the present invention may be implemented by using hardware, software, firmware, or any combination thereof. When this application is implemented by software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general or dedicated computer.

The objectives, technical solutions, and beneficial effects of the embodiments of the present invention are further described in detail in the foregoing specific implementations. It should be understood that, the foregoing descriptions are only specific implementations of the embodiments of the present invention, but are not intended to limit the protection scope of the embodiments of the present invention. Any modification, equivalent replacement, or improvement made based on the technical solutions in the embodiments of the present invention shall fall within the protection scope as defined by the appended claims.

## Claims

1. A downlink transmission method for transmitting information in a radio frame having a variable bandwidth using a first subframe, a second subframe and a third subframe, wherein the first subframe comprises a first symbol type, the second subframe comprises a second symbol type, the third subframe comprises the first symbol type and the second symbol type, the method comprising:

   determining (301) the radio frame, wherein the radio frame comprises
   the first subframe and the second subframe, or
   the first subframe and the third subframe, or
   the second subframe and the third subframe, or

the first subframe, the second subframe and the third subframe,
and
performing (302) downlink transmission based on the determined radio frame, wherein a bandwidth of the first symbol type is a first bandwidth, a bandwidth of the second symbol type is a second bandwidth, and the first bandwidth is less than the second bandwidth, and wherein the first symbol type is used to transmit common information.

2. The method according to claim 1, wherein the performing (302) downlink transmission based on the determined radio frame comprises:
transmitting at least one of a synchronization signal, information carried on a physical broadcast channel, PBCH, information carried on a physical downlink control channel, PDCCH, a cell-specific reference signal, CRS, and system information by using the first symbol type.

3. The method according to claim 2, wherein the CRS is transmitted by using the first symbol type, and the method further comprises:
determining a reference signal sequence of the CRS based on the first bandwidth.

4. The method according to any one of claims 1 to 3, wherein the method further comprises:
transmitting, in a downlink direction, information about a time domain location of at least one of the first symbol type, the first subframe, and the third subframe in the determined radio frame.

5. The method according to claim 4, wherein the transmitting, in a downlink direction, information about a time domain location of at least one of the first symbol type, the first subframe, and the third subframe in the determined radio frame comprises:

transmitting the information about the time domain location of at least one of the first symbol type, the first subframe, and the third subframe in the determined radio frame by using a system message; or
transmitting the information about the time domain location of at least one of the first symbol type, the first subframe, and the third subframe in the determined radio frame by using radio resource control, RRC, signaling; or
transmitting, by using another carrier, the information about the time domain location of at least one of the first symbol type, the first subframe, and the third subframe that are in a current carrier and in the determined radio frame.

6. The method according to any one of claims 1 to 5, wherein a center frequency of the first symbol type is the same as a center frequency of the second symbol type.

7. The method according to any one of claims 1 to 6, wherein at least one of the first subframe and the third subframe is a Multimedia Broadcast multicast service Single Frequency Network, MBSFN, subframe.

8. The method according to any one of claims 1 to 7, wherein the first bandwidth is 1.4 MHz, and the second bandwidth is 3 MHz, 5 MHz, 10 MHz, 15 MHz, or 20 MHz.

9. A wireless communications apparatus (900; 1000) for transmitting information in a radio frame having a variable bandwidth using a first subframe, a second subframe, and a third subframe, wherein the first subframe comprises a first symbol type, the second subframe comprises a second symbol type, the third subframe comprises the first symbol type and the second symbol type,
the apparatus comprising a processor (902; 1005) and a transmitter (901; 1001), wherein
the processor (902; 1005) is configured to determine the radio frame, wherein the radio frame comprises
the first subframe and the second subframe, or
the first subframe and the third subframe, or
the second subframe and the third subframe, or
the first subframe, the second subframe and the third subframe,
and
the transmitter (901; 1001) is configured to transmit downlink information carried on the determined radio frame, wherein a bandwidth of the first symbol type is a first bandwidth, a bandwidth of the second symbol type is a second bandwidth, and the first bandwidth is less than the second bandwidth, and wherein the first symbol type is used to transmit common information.

**10.** The apparatus (900; 1000) according to claim 9, wherein the transmitter (901; 1001) is specifically configured to send at least one of a synchronization signal, information carried on a physical broadcast channel, PBCH, information carried on a physical downlink control channel, PDCCH, a cell-specific reference signal, CRS, and system information that are carried on the first symbol type.

**11.** The apparatus (900; 1000) according to claim 10, wherein the processor (902; 1005) is further configured to: before the transmitter sends the CRS carried on the first symbol type, determine a reference signal sequence of the CRS based on the first bandwidth.

**12.** The apparatus (900; 1000) according to any one of claims 9 to 11, wherein the transmitter (901; 1001) is further configured to send information about a time domain location of at least one of the first symbol type, the first subframe, and the third subframe in the determined radio frame.

**13.** The apparatus (900; 1000) according to claim 12, wherein the transmitter (901; 1001) is specifically configured to send the information about the time domain location of at least one of the first symbol type, the first subframe, and the third subframe in the determined radio frame by using a system message; or the transmitter (901; 1001) is specifically configured to send the information about the time domain location of at least one of the first symbol type, the first subframe, and the third subframe in the determined radio frame by using radio resource control, RRC, signaling; or the transmitter (901; 1001) is specifically configured to send, by using another carrier, the information about the time domain location of at least one of the first symbol type, the first subframe, and the third subframe that are in a current carrier and in the determined radio frame.

**14.** An apparatus, comprising a processor coupled with a non-transitory storage medium storing executable instructions; wherein the executable instructions, when executed by the processor, cause the processor to carry out the method of any one of claims 1-8.

**15.** A computer-readable storage medium comprising instructions which, when executed by a computer, cause the computer to carry out the method of any one of claims 1-8.

**Patentansprüche**

**1.** Abwärtsstreckenübertragungsverfahren zum Übertragen von Informationen in einem Funkrahmen, der eine veränderbare Bandbreite besitzt, unter Verwendung eines ersten Unterrahmens, eines zweiten Unterrahmens und eines dritten Unterrahmens, wobei der erste Unterrahmen einen ersten Symboltyp umfasst, der zweite Unterrahmen einen zweiten Symboltyp umfasst und der dritte Unterrahmen den ersten Symboltyp und den zweiten Symboltyp umfasst und das Verfahren Folgendes umfasst:
Festlegen (301) des Funkrahmens, wobei der Funkrahmen Folgendes umfasst:

den ersten Unterrahmen und den zweiten Unterrahmen oder
den ersten Unterrahmen und den dritten Unterrahmen oder
den zweiten Unterrahmen und den dritten Unterrahmen oder
den ersten Unterrahmen, den zweiten Unterrahmen und den dritten Unterrahmen und Durchführen (302) einer Abwärtsstreckenübertragung auf der Grundlage des festgelegten Funkrahmens, wobei eine Bandbreite des ersten Symboltyps eine erste Bandbreite ist, eine Bandbreite des zweiten Symboltyps eine zweite Bandbreite ist und die erste Bandbreite kleiner als die zweite Bandbreite ist und wobei der erste Symboltyp verwendet wird, um allgemeine Informationen zu übertragen.

**2.** Verfahren nach Anspruch 1, wobei das Durchführen (302) einer Abwärtsstreckenübertragung auf der Grundlage des festgelegten Funkrahmens Folgendes umfasst:
Übertragen eines Synchronisationssignals und/oder von Informationen, die in einem physischen "Broadcast"-Kanal, PBCH, geführt werden und/oder von Informationen, die in einem physischen Abwärtsstreckensteuerkanal, PDCCH, geführt werden und/oder eines zellenspezifischen Bezugssignals, CRS, und/oder von Systeminformationen unter Verwendung des ersten Symboltyps.

**3.** Verfahren nach Anspruch 2, wobei das CRS unter Verwendung des ersten Symboltyps übertragen wird und das Verfahren ferner Folgendes umfasst:
Festlegen einer Bezugssignalfolge des CRS auf der Grundlage der ersten Bandbreite.

**4.** Verfahren nach einem der Ansprüche 1 bis 3, wobei das Verfahren ferner Folgendes umfasst:
Übertragen in einer Abwärtsstreckenrichtung von Informationen über einen Zeitdomänenort des ersten Symboltyps und/oder des ersten Unterrahmens und/oder des dritten Unterrahmens im festgelegten Funkrahmen.

**5.** Verfahren nach Anspruch 4, wobei das Übertragen in einer Abwärtsstreckenrichtung von Informationen über einen Zeitdomänenort des ersten Symboltyps und/oder des ersten Unterrahmens und/oder des dritten Unterrahmens im festgelegten Funkrahmen Folgendes umfasst:

Übertragen der Informationen über den Zeitdomänenort des ersten Symboltyps und/oder des ersten Unterrahmens und/oder des dritten Unterrahmens im festgelegten Funkrahmen unter Verwendung einer Systemnachricht oder
Übertragen der Informationen über den Zeitdomänenort des ersten Symboltyps und/oder des ersten Unterrahmens und/oder des dritten Unterrahmens im festgelegten Funkrahmen unter Verwendung einer Funkbetriebsmittelsteuerungssignalisierung, RRC-Signalisierung oder
Übertragen unter Verwendung eines anderen Trägers der Informationen über den Zeitdomänenort des ersten Symboltyps und/oder des ersten Unterrahmens und/oder des dritten Unterrahmens, die sich in einem aktuellen Träger und im festgelegten Funkrahmen befinden.

**6.** Verfahren nach einem der Ansprüche 1 bis 5, wobei eine Mittenfrequenz des ersten Symboltyps gleich der Mittenfrequenz des zweiten Symboltyps ist.

**7.** Verfahren nach einem der Ansprüche 1 bis 6, wobei der erste Unterrahmen und/oder der dritte Unterrahmen ein Einzelfrequenznetzunterrahmen eines Multimedia-"Broadcast/Multicast"-Dienstes, MBSFN-Unterrahmen, ist.

**8.** Verfahren nach einem der Ansprüche 1 bis 7, wobei die erste Bandbreite 1,4 MHz ist und die zweite Bandbreite 3 MHz, 5 MHz, 10 MHz, 15 MHz oder 20 MHz ist.

**9.** Drahtlose Kommunikationsvorrichtung (900; 1000) zum Übertragen von Informationen in einem Funkrahmen, der eine veränderbare Bandbreite besitzt, unter Verwendung eines ersten Unterrahmens, eines zweiten Unterrahmens und eines dritten Unterrahmens, wobei der erste Unterrahmen einen ersten Symboltyp umfasst, der zweite Unterrahmen einen zweiten Symboltyp umfasst, der dritte Unterrahmen den ersten Symboltyp und den zweiten Symboltyp umfasst und die Vorrichtung einen Prozessor (902; 1005) und einen Sender (901; 1001) umfasst, wobei der Prozessor (902; 1005) konfiguriert ist, den Funkrahmen festzulegen, wobei der Funkrahmen Folgendes umfasst:

den ersten Unterrahmen und den zweiten Unterrahmen oder
den ersten Unterrahmen und den dritten Unterrahmen oder
den zweiten Unterrahmen und den dritten Unterrahmen oder
den ersten Unterrahmen, den zweiten Unterrahmen und den dritten Unterrahmen und der Sender (901; 1001) konfiguriert ist, Abwärtsstreckeninformationen, die im festgelegten Funkrahmen geführt werden, zu übertragen, wobei eine Bandbreite des ersten Symboltyps eine erste Bandbreite ist, eine Bandbreite des zweiten Symboltyps eine zweite Bandbreite ist und die erste Bandbreite kleiner als die zweite Bandbreite ist und wobei der erste Symboltyp verwendet wird, um allgemeine Informationen zu übertragen.

**10.** Vorrichtung (900; 1000) nach Anspruch 9, wobei der Sender (901; 1001) speziell konfiguriert ist, ein Synchronisationssignal und/oder Informationen, die in einem physischen "Broadcast"-Kanal, PBCH, geführt werden und/oder Informationen, die in einem physischen Abwärtsstreckensteuerkanal, PDCCH, geführt werden und/oder ein zellenspezifisches Bezugssignal, CRS, und/oder Systeminformationen, die im ersten Symboltyp geführt werden, zu senden.

**11.** Vorrichtung (900; 1000) nach Anspruch 10, wobei der Prozessor (902; 1005) ferner konfiguriert ist, bevor der Sender das CRS, das im ersten Symboltyp geführt wird, sendet, eine Bezugssignalfolge des CRS auf der Grundlage der ersten Bandbreite festzulegen.

**12.** Vorrichtung (900; 1000) nach einem der Ansprüche 9 bis 11, wobei der Sender (901; 1001) ferner konfiguriert ist, Informationen über einen Zeitdomänenort des ersten Symboltyps und/oder des ersten Unterrahmens und/oder des dritten Unterrahmens im festgelegten Funkrahmen zu senden.

**13.** Vorrichtung (900; 1000) nach Anspruch 12, wobei der Sender (901; 1001) speziell konfiguriert ist, die Informationen über den Zeitdomänenort des ersten Symboltyps und/oder des ersten Unterrahmens und/oder des dritten Unterrahmens im festgelegten Funkrahmen unter Verwendung einer Systemnachricht zu senden; oder der Sender (901; 1001) speziell konfiguriert ist, die Informationen über den Zeitdomänenort des ersten Symboltyps und/oder des ersten Unterrahmens und/oder des dritten Unterrahmens im festgelegten Funkrahmen unter Verwendung einer Funkbetriebsmittelsteuerungssignalisierung, RRC-Signalisierung, zu senden; oder der Sender (901; 1001) speziell konfiguriert ist, unter Verwendung eines anderen Trägers die Informationen über den Zeitdomänenort des ersten Symboltyps und/oder des ersten Unterrahmens und/oder des dritten Unterrahmens, die sich in einem aktuellen Träger und im festgelegten Funkrahmen befinden, zu senden.

14. Vorrichtung, die einen Prozessor umfasst, der an ein nichttransitorisches Speichermedium gekoppelt ist, das ausführbare Anweisungen speichert; wobei die ausführbaren Anweisungen, wenn sie durch den Prozessor ausgeführt werden, bewirken, dass der Prozessor das Verfahren nach einem der Ansprüche 1-8 ausführt.

15. Computerlesbares Speichermedium, das Anweisungen umfasst, die, wenn sie durch einen Computer ausgeführt werden, bewirken, dass der Computer das Verfahren nach einem der Ansprüche 1-8 ausführt.


**Revendications**

1. Procédé de transmission en liaison descendante pour transmettre des informations dans une trame radio ayant une largeur de bande variable en utilisant une première sous-trame, une deuxième sous-trame et une troisième sous-trame, dans lequel la première sous-trame comprend un premier type de symbole, la deuxième sous-trame comprend un second type de symbole, la troisième sous-trame comprend le premier type de symbole et le second type de symbole,
le procédé comprenant :

   la détermination (301) de la trame radio, dans lequel la trame radio comprend la première sous-trame et la deuxième sous-trame, ou
   la première sous-trame et la troisième sous-trame, ou
   la deuxième sous-trame et la troisième sous-trame, ou
   la première sous-trame, la deuxième sous-trame et la troisième sous-trame, et
   la réalisation (302) d'une transmission en liaison descendante sur la base de la trame radio déterminée, dans lequel une largeur de bande du premier type de symbole est une première largeur de bande, une largeur de bande du second type de symbole est une seconde largeur de bande, et la première largeur de bande est inférieure à la seconde largeur de bande, et dans lequel le premier type de symbole est utilisé pour transmettre des informations communes.

2. Procédé selon la revendication 1, dans lequel la réalisation (302) d'une transmission en liaison descendante sur la base de la trame radio déterminée comprend :
   la transmission d'au moins un parmi un signal de synchronisation, des informations portées sur un canal de diffusion physique, PBCH, des informations portées sur un canal de commande de liaison descendante physique, PDCCH, d'un signal de référence spécifique de cellule, CRS, et des informations de système en utilisant le premier type de symbole.

3. Procédé selon la revendication 2, dans lequel le CRS est transmis en utilisant le premier type de symbole, et le procédé comprend en outre :
   la détermination d'une séquence de signal de référence du CRS sur la base de la première largeur de bande.

4. Procédé selon l'une quelconque des revendications 1 à 3, dans lequel le procédé comprend en outre :
   la transmission, dans une direction de liaison descendante, d'informations concernant une localisation de domaine de temps d'au moins un parmi le premier type de symbole, la première sous-trame, et la troisième sous-trame dans la trame radio déterminée.

5. Procédé selon la revendication 4, dans lequel la transmission, dans une direction de liaison descendante, d'informations concernant une localisation de domaine de temps d'au moins un parmi le premier type de symbole, la première sous-trame, et la troisième sous-trame dans la trame radio déterminée comprend :

   la transmission des informations concernant la localisation de domaine de temps d'au moins un parmi le premier type de symbole, la première sous-trame, et la troisième sous-trame dans la trame radio déterminée en utilisant un système message ; ou

la transmission des informations concernant la localisation de domaine de temps d'au moins un parmi le premier type de symbole, la première sous-trame, et la troisième sous-trame dans la trame radio déterminée en utilisant une signalisation de contrôle de ressources radio, RRC ; ou

la transmission, en utilisant une autre porteuse, des informations concernant la localisation de domaine de temps d'au moins un parmi le premier type de symbole, la première sous-trame, et la troisième sous-trame qui sont dans une porteuse actuelle et dans la trame radio déterminée.

6. Procédé selon l'une quelconque des revendications 1 à 5, dans lequel une fréquence centrale du premier type de symbole est la même qu'une fréquence centrale du second type de symbole.

7. Procédé selon l'une quelconque des revendications 1 à 6, dans lequel au moins une parmi la première sous-trame et la troisième sous-trame est une sous-trame de réseau monofréquence de service de diffusion/multidiffusion multimédia, MBSFN.

8. Procédé selon l'une quelconque des revendications 1 à 7, dans lequel la première largeur de bande est de 1,4 MHz, et la seconde largeur de bande est de 3 MHz, de 5 MHz, de 10 MHz, de 15 MHz, ou de 20 MHz.

9. Appareil de communication sans fil (900 ; 1000) pour transmettre des informations dans une trame radio ayant une largeur de bande variable en utilisant une première sous-trame, une deuxième sous-trame, et une troisième sous-trame, dans lequel la première sous-trame comprend un premier type de symbole, la deuxième sous-trame comprend un second type de symbole, la troisième sous-trame comprend le premier type de symbole et le second type de symbole,

l'appareil comprenant un processeur (902 ; 1005) et un transmetteur (901 ; 1001), dans lequel

le processeur (902 ; 1005) est configuré pour déterminer la trame radio, dans lequel la trame radio comprend

la première sous-trame et la deuxième sous-trame, ou

la première sous-trame et la troisième sous-trame, ou

la deuxième sous-trame et la troisième sous-trame, ou

la première sous-trame, la deuxième sous-trame et la troisième sous-trame, et

le transmetteur (901 ; 1001) est configuré pour transmettre des informations de liaison descendante portées sur la trame radio déterminée, dans lequel une largeur de bande du premier type de symbole est une première largeur de bande, une largeur de bande du second type de symbole est une seconde largeur de bande, et la première largeur de bande est inférieure à la seconde largeur de bande, et dans lequel le premier type de symbole est utilisé pour transmettre des informations communes.

10. Appareil (900 ; 1000) selon la revendication 9, dans lequel le transmetteur (901 ; 1001) est spécifiquement configuré pour envoyer au moins un parmi un signal de synchronisation, des informations portées sur un canal de diffusion physique, PBCH, des informations portées sur un canal de commande de liaison descendante physique, PDCCH, un signal de référence spécifique de cellule, CRS, et des informations de système qui sont portées sur le premier type de symbole.

11. Appareil (900 ; 1000) selon la revendication 10, dans lequel le processeur (902 ; 1005) est en outre configuré pour :
avant que le transmetteur envoie le CRS porté sur le premier type de symbole, déterminer une séquence de signal de référence du CRS sur la base de la première largeur de bande.

12. Appareil (900 ; 1000) selon l'une quelconque des revendications 9 à 11, dans lequel le transmetteur (901 ; 1001) est en outre configuré pour envoyer des informations concernant une localisation de domaine de temps d'au moins un parmi le premier type de symbole, la première sous-trame, et la troisième sous-trame dans la trame radio déterminée.

13. Appareil (900 ; 1000) selon la revendication 12, dans lequel le transmetteur (901 ; 1001) est spécifiquement configuré pour envoyer les informations concernant la localisation de domaine de temps d'au moins un parmi le premier type de symbole, la première sous-trame, et la troisième sous-trame dans la trame radio déterminée en utilisant un système message; ou le transmetteur (901 ; 1001) est spécifiquement configuré pour envoyer les informations concernant la localisation de domaine de temps d'au moins un parmi le premier type de symbole, la première sous-trame, et la troisième sous-trame dans la trame radio déterminée en utilisant une signalisation de contrôle de ressources radio, RRC ; ou le transmetteur (901 ; 1001) est spécifiquement configuré pour envoyer, en utilisant une autre porteuse, les informations concernant la localisation de domaine de temps d'au moins un parmi le premier type de symbole, la première sous-trame, et la troisième sous-trame qui sont dans une porteuse actuelle et dans la trame radio déterminée.

**14.** Appareil, comprenant un processeur couplé à un support de stockage non transitoire stockant des instructions exécutables ; dans lequel les instructions exécutables, lorsqu'elles sont exécutées par le processeur, font en sorte que le processeur réalise le procédé selon l'une quelconque des revendications 1 à 8.

**15.** Support de stockage lisible par ordinateur comprenant des instructions qui, lorsqu'elles sont exécutées par un ordinateur, font en sorte que l'ordinateur réalise le procédé selon l'une quelconque des revendications 1 à 8.

FIG. 1

FIG. 2A

FIG. 2B

| Base station | | Terminal |
|---|---|---|

←——301: Determine a radio frame——→

←—— 302: Perform downlink transmission based on the radio frame ——→

## FIG. 3

A base station delivers a broadcast message (a type indicator of a radio frame) — 401

Whether a used radio frame is a radio frame having a variable bandwidth? — 402

Yes / No

Does a terminal support the radio frame having a variable bandwidth? — 403

Yes / No

The terminal reads information about the radio frame having a variable bandwidth in the broadcast message — 404

Transmit information about a time domain location of at least one of a first symbol, a first subframe, and a third subframe in the radio frame having a variable bandwidth — 405

Perform downlink transmission based on the radio frame having a variable bandwidth — 406

Perform downlink transmission based on a radio frame having a fixed bandwidth — 407

## FIG. 4

FIG. 5A

FIG. 5B

FIG. 6A

FIG. 6B

Radio frame having a
variable bandwidth

Second
subframe

Third subframe

## FIG. 6C

Radio frame having a
variable bandwidth

First
subframe

Second
subframe

Third
subframe

## FIG. 6D

First
subframe

Second
subframe

Third
subframe

$f_0$

...

...

First subframe
(14 first symbols)

Second subframe
(14 second symbols)

Third subframe (seven first symbols and
seven second symbols)

## FIG. 7

FIG. 8A

⊠    Reference signal

FIG. 8B

900

FIG. 9

1000

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013070918 A1

**Non-patent literature cited in the description**

- EPDCCH initialization for MTC. **ERICSSON.** 3 GPP DRAFT; R1-152501 M-PDCCH INITIALIZATION FOR MTC. 3RD GENERATION PARTNERSHIP PROJECT (3GPP), 24 May 2015